# EUROPEAN PATENT SPECIFICATION

(11) **EP 3 840 526 B1**
(45) Date of publication and mention of the grant of the patent: **11.01.2023**
(21) Application number: 19857999.7
(22) Date of filing: 27.08.2019
(51) Int. Cl.: H04W 4/00, H04M 1/72403, H04W 88/06, H04W 76/15, H04B 7/022

(54) **SERVICE IDENTIFIER DISPLAY CONTROL METHOD AND APPARATUS**
VERFAHREN UND VORRICHTUNG ZUR STEUERUNG DER ANZEIGE EINES DIENSTIDENTIFIKATORS
PROCÉDÉ ET APPAREIL DE COMMANDE D'AFFICHAGE D'IDENTIFIANT DE SERVICE

(30) Priority: 04.09.2018 CN 201811027733
(43) Date of publication of application: 23.06.2021
(73) Proprietor: GUANGDONG OPPO MOBILE TELECOMMUNICATIONS CORP., LTD., Dongguan Guangdong 523860 (CN)
(72) Inventor: TANG, Kai, Dongguan, Guangdong 523860 (CN); XIA, Yang, Dongguan, Guangdong 523860 (CN); ZHANG, Tao, Dongguan, Guangdong 523860 (CN)
(74) Representative: Penza, Giancarlo
(86) International application number: PCT/CN2019/102883
(87) International publication number: WO 2020/048360

(56) References cited:
- EP-A1- 3 836 594
- WO-A1-2018/144781
- CN-A- 104 244 466
- CN-A- 108 366 437
- VERIZON ET AL: "Considerations on 5G icons", 3GPP DRAFT; CLEAN_R2-1810771 CONSIDERATIONS ON 5G ICONS V6.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, QC, Canada; 20180702 - 20180706 2 July 2018 (2018-07-02), XP051526528, Retrieved from the Internet: URL:http://www.3gpp.org/ftp/tsg%5Fran/WG2% 5FRL2/TSGR2%5FAHs/2018%5F07%5FNR/Docs/R2%2 D1810771%2Ezip [retrieved on 2018-07-02]
- GSMA: "LS Reply to 3GPP SA2 on Status Icon related to 5G", 3GPP DRAFT; S2-180018_S2-178933_LS REPLY TO 3GPP SA2 ON STATUSICON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. SA WG2, no. Gothenburg, Sweden; 20180122 - 20180126 19 December 2017 (2017-12-19), XP051380228, Retrieved from the Internet: URL:http://www.3gpp.org/ftp/tsg%5Fsa/WG2%5 FArch/TSGS2%5F125%5FGothenburg/Docs/ [retrieved on 2017-12-19]
- INTEL CORPORATION: "Considerations on the frequency range specific NR RRM requirements", 3GPP DRAFT; R4-1703004 NR BAND SPECIFIC REQUIREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Spokane, US; 20170403 - 20170407 3 April 2017 (2017-04-03), XP051246236, Retrieved from the Internet: URL:http://www.3gpp.org/ftp/Meetings_3GPP_ SYNC/RAN4/Docs/ [retrieved on 2017-04-03]
- QUALCOMM INCORPORATED et al.: "Consideration on the GSMA NR Indication Requirements", 3GPP TSG-RAN WG2 Meeting #101 R2-1803664, 2 March 2018 (2018-03-02), XP051400687,
- NEC: "Inter RAT Tight Interworking", 3GPP TSG RAN WG3 meeting #92 R3-161188, 27 May 2016 (2016-05-27), XP051094647,

## Description

### TECHNICAL FIELD

This disclosure relates to the technical field of electronic devices, and in particular to a method and an apparatus for displaying a service identifier.

### BACKGROUND

With the development of mobile communication technology, users have an increasing demand for communication with electronic devices such as mobile phones. When the electronic devices currently on the market transmit data, data services may be provided through a data network such as the 4th Generation (4G) Long Term Evolution (LTE) network, whereas telephone services may still need to be provided through a common circuit switching domain network such as the 2th Generation (2G) network or the 3th Generation (3G) network. The electronic device may display a service identifier on a relevant interface on the local end, to indicate the current communication status of the electronic device.

3GPP DRAFT_R2-1810771, by Verizon w/ title"Considerations on 5G icons" published on 2018-07-02, XP051526528, discloses the introduction of an eMBB-like icon ("5G Gigabyte networks") for indicating to the user that (s)he is connected to a high throughput subnetwork (or slice), and also proposes to expand the indication (upperLayerIndication) provided by the network from 1 to 3 bits in order to provide the needed granurality.

### SUMMARY

Embodiments of the present disclosure provide a method and an apparatus for displaying a service identifier, in order to improve the comprehensiveness and accuracy of displaying a service identifier of an eMBB service of an electronic device.

In a first aspect, the embodiments of the disclosure provide a method for displaying a service identifier, which is applicable to an electronic device. The electronic device supports an enhanced Mobile Broadband eMBB service and a doubly connected mode. In the doubly connected mode, the electronic device establishes a first communication connection with a first network device and establishes a second communication connection with a second network device. The first and second network devices are on a first 5th Generation5G Non-Standalone NSA network. The first network device is an evolutional 4th Generation 4G nodeB eNB. The second network device is a 5G nodeB gNB. A core of the first 5G NSA network is a 5G Next Generation core. The first network device communicates with the second network device and the 5G Next Generation core. The method may include:
acquiring a New Radio NR Reference Signal Receiving Power RSRP and an uplink transmission bandwidth threshold, when it is detected that the electronic device activates the eMBB service;
determining a service identifier of the eMBB service according to the NR RSPR and the uplink transmission bandwidth threshold; and
displaying the service identifier of the eMBB service.

In a second aspect, the embodiments of the present disclosure provide an apparatus for displaying a service identifier, which is applicable to an electronic device. The electronic device supports an eMBB service and a doubly connected mode. In the doubly connected mode, the electronic device establishes a first communication connection with a first network device and establishes a second communication connection with a second network device. The first and second network devices are on a first 5th Generation 5G Non-Standalone NSA network. The first network device is an evolutional 4th Generation 4G nodeB eNB. The second network device is a 5G nodeB gNB. A core of the first 5G NSA network is a 5G Next Generation core. The first network device communicates with the second network device and the 5G Next Generation core. The apparatus may include a processing unit and a communication unit.

The processing unit is configured to acquire a New Radio NR Reference Signal Receiving Power RSRP and an uplink transmission bandwidth threshold when it is detected that the electronic device activates the eMBB service, determine a service identifier of the eMBB service according to the NR RSPR and the uplink transmission bandwidth threshold; and display the service identifier of the eMBB service.

In a third aspect, the embodiments of the present disclosure provide an electronic device, which may include a processor, a memory, a communication interface, and one or more programs. The one or more programs are stored in the memory and configured to be executed by the processor. The one or more programs include instructions for performing the operations in the method mentioned in the first aspect of the embodiments of the present disclosure.

In a fourth aspect, the embodiments of the present disclosure provide a computer-readable storage medium. The computer-readable storage medium stores a computer program for electronic data interchange, and the computer program causes a computer to implement part or all of the operations in the method mentioned in the first aspect of the embodiments of the present disclosure.

In a fifth aspect, the embodiments of the present disclosure provide a computer program product. The computer program product includes a non-transitory computer-readable storage medium storing a computer program. The computer program is operable to cause a computer to implement part or all of the operations in the method mentioned in the first aspect of the embodiments of the present disclosure. The computer program product may be a software installation package.

### BRIEF DESCRIPTION OF THE DRAWINGS

In order to more clearly illustrate technical solutions in the embodiments of the present disclosure or the related art, drawings needed for the description of the embodiments or the related art will be briefly introduced hereafter. Obviously, the drawings in the following description show only some embodiments of the present disclosure. For those of ordinary skill in the art, other drawings can be obtained based on these drawings without any creative work.
FIG. 1a is a diagram illustrating an exemplary architecture of a wireless communication system according to the embodiments of the present disclosure;
FIG. 1b is a schematic diagram illustrating connection of the communication system according to the embodiments of the present disclosure;
FIG. 2 is a schematic flowchart of a method for displaying a service identifier according to the embodiments of the present disclosure;
FIG. 3 is a schematic flowchart of another method for displaying a service identifier according to the embodiments of the present disclosure;
FIG. 4 is a schematic flowchart of another method for displaying a service identifier according to the embodiments of the present disclosure;
FIG. 5 is a schematic structural diagram of an electronic device according to the embodiments of the present disclosure; and
FIG. 6 is a block diagram illustrating functional units of an apparatus for displaying a service identifier according to the embodiments of the present disclosure.

### DETAILED DESCRIPTION OF PREFERRED EMBODIMENTS

In order to enable those skilled in the art to better understand the solutions of the disclosure, the technical solutions in the embodiments of the disclosure will be clearly and completely described below in conjunction with the drawings in the embodiments of the disclosure. Obviously, the described embodiments are only a part, rather than all, of the embodiments of this disclosure.

The terms "first", "second" and the like in the description, claims and the drawings of the disclosure are used to distinguish different objects, rather than describing a specific sequence. In addition, the terms "comprise" and "have" as well as any variations thereof are not intended to exclude other items not mentioned. For example, a process, method, system, product or device that includes a series of operations or units is not limited to the listed operations or units, but may also include unlisted operations or units, or may optionally include other operations or units inherent to such process, method, product or device.

Reference to "an embodiment" herein means that a specific feature, structure, or characteristic described in conjunction with this embodiment may be included in at least one embodiment of the present disclosure. The appearance of the phrase in various places of the description does not necessarily refer to a same embodiment, nor is it an independent or alternative embodiment mutually exclusive with other embodiments. Those skilled in the art may clearly and implicitly understand that the embodiments described herein can be combined with other embodiments.

The electronic device involved in the embodiments of the present disclosure may be an electronic device with a data transmission capability. Such an electronic device may include: various handheld devices, on-board equipment, wearable devices and computing devices with a wireless communication function, or other processing devices connected to wireless modems; and various user equipment (UE), Mobile Stations (MS), terminal devices, and so on. The embodiments of the disclosure will be described in detail below.

Regarding the service identifier of the 5th Generation (5G) system, there is currently no solution for displaying the service identifier of an enhanced Mobile Broadband (eMBB) service in the 5G Non-Standalone (NSA) communication system.

In an optional implementation of the method for displaying a service identifier, the determining the service identifier of the eMBB service according to the NR RSPR and the uplink transmission bandwidth threshold includes:
determining a 5G identifier of the eMBB service as the service identifier of the eMBB service, when the NR RSPR is greater than a power threshold and the uplink transmission bandwidth threshold is greater than an uplink threshold; or
acquiring a 4G ratio LTE_ratio and a 5G ratio NR_ratio in an uplink data distribution when the NR RSPR is smaller than the power threshold and the uplink transmission bandwidth threshold is smaller than the uplink threshold, and determining a 4G identifier of the eMBB service as the service identifier of the eMBB service when the LTE_ratio is greater than the NR_ratio, or determining a 5G identifier of the eMBB service as the service identifier of the eMBB service when the LTE_ratio is smaller than or equal to the NR_ratio.

In an optional implementation of the method for displaying a service identifier, the LTE_ratio is calculated as follows: LTE_ratio=(10GB-A)/10GB, where A is an upstream transmission bandwidth pre-assigned to the first network device; and the NR_ratio is obtained by subtracting the LTE_ratio from the uplink transmission bandwidth threshold.

In an optional implementation of the method for displaying a service identifier, the 5G identifier of the eMBB service is 5G eMBB, and the 4G identifier of the eMBB service is 4G.

In an optional implementation of the method for displaying a service identifier, after it is detected that the electronic device activates the eMBB service, the method may further include:
sending, to the first network device, a service identifier query request for querying the service identifier of the eMBB service;
receiving service identifier indication information from the first network device; and
determining the service identifier of the eMBB service according to the service identifier indication information, and storing the determined service identifier of the eMBB service.

In an optional implementation of the method for displaying a service identifier, the displaying the service identification of the eMBB service may include:
displaying the service identifier at a preset position of an interface for the eMBB service of the electronic device, the preset position matching a display position of the electronic device where a network connection status is displayed.

In an optional implementation of the method for displaying a service identifier, the method may further include: transmitting data of the eMBB service through the first 5G NSA network.

In an optional implementation of the method for displaying a service identifier, the transmitting the data of the eMBB service through the first 5G NSA network may include: transmitting the data of the eMBB service through the second communication connection and the 5G Next Generation core.

In an optional implementation of the method for displaying a service identifier, the transmitting the data of the eMBB service through the first 5G NSA network may include: transmitting the data of the eMBB service through the second and first communication connections and the 5G Next Generation core.

In an optional implementation of the apparatus for displaying a service identifier, the processing unit is specifically configured to: determine a 5G identifier of the eMBB service as the service identifier of the eMBB service, when the NR RSPR is greater than a power threshold and the uplink transmission bandwidth threshold is greater than an uplink threshold; or acquire a 4G ratio LTE_ratio and a 5G ratio NR_ratio in an uplink data distribution when the NR RSPR is smaller than the power threshold and the uplink transmission bandwidth threshold is smaller than the uplink threshold, and determine a 4G identifier of the eMBB service as the service identifier of the eMBB service when the LTE_ratio is greater than the NR_ratio, or determine a 5G identifier of the eMBB service as the service identifier of the eMBB service when the LTE_ratio is smaller than or equal to the NR_ratio.

In an optional implementation of the apparatus for displaying a service identifier, the LTE_ratio is calculated as follows: LTE_ratio=(10GB-A)/10GB, where A is an upstream transmission bandwidth pre-assigned to the first network device, and the NR_ratio is obtained by subtracting the LTE_ratio from the uplink transmission bandwidth threshold.

In an optional implementation of the apparatus for displaying a service identifier, the 5G identifier of the eMBB service is 5G eMBB, and the 4G identifier of the eMBB service is 4G.

In an optional implementation of the apparatus for displaying a service identifier, the communication unit is configured to send, to the first network device, a service identifier query request for querying the service identifier of the eMBB service; and receive service identifier indication information from the first network device. The processing unit is further configured to determine the service identifier of the eMBB service according to the service identifier indication information, and store the determined service identifier of the eMBB service.

In an optional implementation of the apparatus for displaying a service identifier, the processing unit is specifically configured to display the service identifier at a preset position of an interface for the eMBB service of the electronic device, the preset position matching a display position of the electronic device where a network connection status is displayed.

In an optional implementation of the apparatus for displaying a service identifier, the communication unit is further configured to transmit data of the eMBB service data through the first 5G NSA network.

In an optional implementation of the apparatus for displaying a service identifier, the communication unit is specifically configured to transmit the data of the eMBB service through the second communication connection and the 5G Next Generation core.

The technical solutions of the embodiments of the present disclosure can be applied to various communication systems, including but not limited to: Global System of Mobile Communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide Interoperability for Microwave Access (WiMAX) communication system, 5G New Radio (NR), and the like. In particular, the technical solutions of the embodiments of the present disclosure may be applied to the eMBB service under the Option 7a architecture.

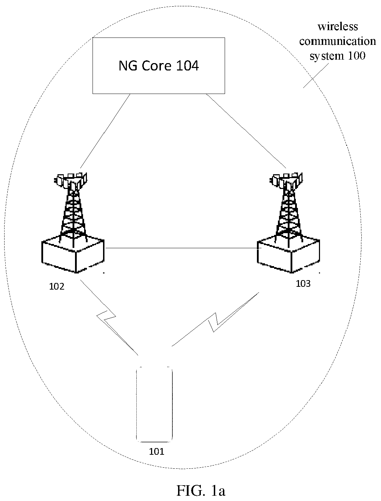

As shown in FIG. 1a, a wireless communication system 100 according to the embodiments of the present disclosure may include: an electronic device, nodeBs, and a 5G Next Generation core. The network, which the electronic device 101 accesses, is a 5G NSA network. This network may include a nodeB 102 (a 4G nodeB, eNB), a nodeB 103 (a 5G nodeB, gNB), and a Next generation Core 104. Control signaling may be transmitted through the nodeB 102, and user data of the electronic device may be transmitted to the NG Core 104 respectively through the nodeB 102 and nodeB 103. The nodeB 103 communicates with the NG Core 104. The electronic device 101 may simultaneously communicate with the nodeB 102 and the nodeB 103 in the doubly connected mode, and may implement data services such as eMBB services through this network.

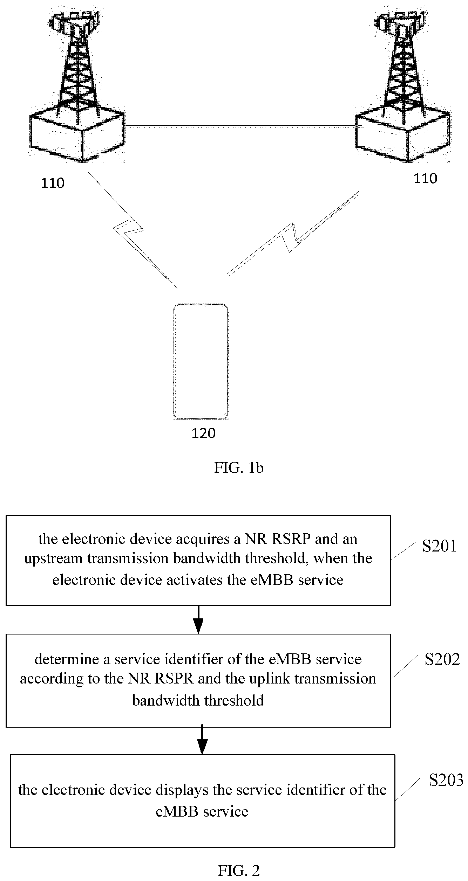

The communication system to which the embodiments of the present disclosure are applied is exemplarily illustrated in FIG. 1b. The communication system may include network devices 110. The network devices 110 may communicate with a terminal device 120 (or referred to as a communication terminal device or a terminal device). The network devices 110 may provide communication covering a specific geographic area, and may communicate with terminal devices within the covered area. As shown in FIG. 1b, the terminal device supports dual connectivity, that is, the terminal device 120 may be connected to two network devices, where one of the network devices 110 (as shown on the left side of FIG. 1b) may be an evolutional NodeB (eNB or eNodeB) in the LTE system, and the other one of the network devices (as shown on the right side of FIG. 1b) may be a NodeB in the 5G network (gNB).

The communication system may also include at least one terminal device 120 located within the coverage area of the network devices 110. The "terminal device" used herein may be connected through multiple ways including but not limited to: wired connection, such as connections via Public Switched Telephone Networks (PSTN), via Digital Subscriber Lines (DSL) or via digital cables, and direct cable connections; and/or connections via another data connection/network; and/or connections via a wireless interface, for example connections via a cellular network, a Wireless Local Area Network (WLAN), a digital TV network such as DVB-H network, a satellite networks, or an AM-FM broadcast transmitter; and/or connections by means of another terminal device that is configured to receive/send communication signals; and/or connections via Internet of Things (IoT) equipment. The terminal device configured to communicate through a wireless interface may be referred to as a "wireless communication terminal device", a "wireless terminal device" or a "mobile terminal device". Examples of the mobile terminal device may include but are not limited to: satellite or cellular phones; Personal Communications System (PCS) terminal devices that integrate cellular radio phones with data processing, fax, and data communication capabilities; Personal Digital Assistants (PDAs) incorporating a radio phone, a pager, Internet/Intranet access, a Web browser, a notebook, calendar and/or a Global Positioning System (GPS) receiver; and common laptop and/or palmtop receiver or other electronic devices including a radio phone transceiver. The terminal device may refer to an access terminal device, user equipment (UE), a user unit, a user station, a mobile station, a mobile terminal, a remote station, a remote terminal device, a mobile device, a user terminal device, a terminal device, a wireless communication device, a user agent or a user device. The access terminal device may be a cellular phone, a cordless phone, a Session Initiation Protocol (SIP) phone, a Wireless Local Loop (WLL) station, a PDA, a handheld device with a wireless communication function, a computing device or other processing devices connected to wireless modems, on-board equipment, a wearable device, a terminal device in the 5G network, a terminal device in the future evolutional PLMN, or the like.

Referring to FIG. 2, a schematic flow diagram of a method for displaying a service identifier according to the embodiments of the present disclosure is illustrated, which method may be applied to the electronic device shown in FIG. 1a or FIG. 1b. The electronic device supports an eMBB service and a doubly connected mode. In the doubly connected mode, the electronic device establishes a first communication connection with a first network device and establishes a second communication connection with a second network device. The first and second network devices are on a first 5th Generation 5G Non-Standalone NSA network. The first network device is an evolutional 4th Generation 4G nodeB eNB, and the second network device is a 5G nodeB gNB. A core of the first 5G NSA network is a packet 5G Next Generation core (NG core). The first network device communicates with the second network device and the NG core. As shown in the figure, the method for displaying a service identifier may include operations as follows.

In operation 201, the electronic device acquires a NR Reference Signal Receiving Power (RSRP) and an upstream transmission bandwidth threshold, when the electronic device activates the eMBB service.

In operation 202, the electronic device determines a service identifier of the eMBB service according to the NR RSPR and the uplink transmission bandwidth threshold.

The service identifier indicates a transmission form of the service data of the eMBB service under different network architectures. For example, in a 4G LTE network, the electronic device displays a 4G identifier, such as 4G or LTE eMBB, on an interface for the eMBB service. For another example, in a 5G network, the electronic device displays a 5G identifier, such as 5G or 5G eMBB, on the interface for the eMBB service. The identifier is used to indicate the data distribution situation under the uplink data distribution scheme performed on the electronic device. For example, if a 4G identifier is displayed, it means that an uplink data distribution scheme is adopted in which a part of the data is transmitted to theNR core through the eNB and the other part of the data is transmitted to NR core through the gNB, and an LTE_ratio (4G ratio) is greater than a NR_ratio (5G ratio). For another example, if 5G eMBB is displayed, it means that no uplink data distribution scheme is adopted, or an uplink data distribution scheme is adopted in which the LTE_ratio is smaller than the NR_ratio.

The LTE_ratio may be calculated as follows: LTE_ratio=(10GB-A)/10GB, where A is an uplink transmission bandwidth pre-assigned to the LTE network. The NR_ratio may be obtained by subtracting the LTE_ratio from the uplink transmission bandwidth threshold, i.e., NR_ratio=the uplink transmission bandwidth threshold-LTE_ratio.

In operation S203, the electronic device displays the service identifier of the eMBB service.

In the embodiments of the present disclosure, when it is detected that the electronic device activates an eMBB service, the electronic device acquires a NR Reference Signal Receiving Power (RSRP) and an uplink transmission bandwidth threshold, determines a service identifier of the eMBB service according to the NR RSPR and the upstream transmission bandwidth threshold, and displays the service identifier on an interface. As can be seen, during the execution of the eMBB service, the electronic device can determine the corresponding service identifier according to the status of the uplink data, and display for example a 4G identifier or a 5G identifier. In this way, the actual data transmission status of the electronic device during the eMBB service can be accurately, intuitively and comprehensively displayed, which is beneficial to improve the comprehensiveness and accuracy of the information display of the electronic device under the eMBB service.

In a possible example, after the electronic device activates the eMBB service, the method may further include: sending, by the electronic device, to the first network device a service identifier query request for querying the service identifier of the eMBB service; receiving service identifier indication information from the first network device; and determining the service identifier of the eMBB service according to the service identifier indication information, and storing the determined service identifier of the eMBB service.

The eMBB service is one of the important functions of the electronic device. After the electronic device accesses the first 5G NSA network, the type of the service identifier corresponding to the data service supported by the current network architecture may be determined by means of the service identifier query request, that is, an agreement on a service identifier query mechanism may be made at the protocol level. In addition, the service identifier information of the eMBB service under the network architecture may exist on the network side.

In an implementation, the electronic device may send the service identifier query request through a control channel (such as a Common Control Channel (CCCH) or a Dedicated Control Channel (DCCH)) with the nodeB. The NG core may receive the service identifier query request from the electronic device, generate service identifier indication information according to a service identifier of the eMBB service that is pre-configured locally, and send the generated service identifier indication information to the electronic device through the nodeB.

The service identifier of the eMBB service may include a 4G identifier and a 5G identifier. The specific representations of the 4G and 5G identifiers may vary among different operators, which are not limited in this disclosure.

In this example, the electronic device can quickly and accurately determine the service identifier of the eMBB service by means of the query mechanism, improving the accuracy and efficiency of displaying the service identifier.

The electronic device may be preset in such a manner that it is enabled to access multiple different network architectures, such as a 4G LTE network, a 5G NSA network (including various sub-network architectures), and a 5G Standalone (SA) network. Resources (such as channels) configured for the electronic device to support the eMBB service may be different under different network architectures. At the level of operators, different operators may deploy mobile networks with different network architectures, and the assigned frequency domain resources are different. Based on this, the service identifier that needs to be displayed may be determined by detecting the difference between the channels currently enabled by the eMBB service.

In this example, since different service channels are enabled when different network architectures support the eMBB service, the electronic device may detect the currently enabled channels, and perform comparison and query based on the different characteristic parameters (such as the RSRP and the uplink transmission bandwidth threshold) of the channels, to obtain the service identifier to be displayed, thereby improving the accuracy and instantaneity of the electronic device in displaying the service identifier.

In a possible example, the displaying, by the electronic device, the service identifier on an interface for the eMBB service of the electronic device may include: displaying the service identifier at a preset position of an interface for the eMBB service of the electronic device, the preset position matching a display position of the electronic device where a network connection status is displayed.

The preset position matching a display position of the electronic device where a network connection status is displayed, may mean that the preset position may be adjacent to, opposite to, or separated by a preset distance (for example, 1 mm to 150 mm) from the display position where the network connection status is displayed, which is not uniquely defined here. In addition, the display parameters (such as color, background color, font, and size) of the service identifier may be consistent with those of the network connection state, or may also be inconsistent therewith, which is also not uniquely defined here. For example, the font size and the background color of the service identifier may be set to be the same as those of the network connection status.

In this example, the electronic device can display the service identifier at a preset position on an interface for the eMBB service, with the preset position matching the display position where the network connection status is displayed. As such, the current communication status of the electronic device can be completely presented, and the comprehensiveness of the electronic device in displaying the communication status information can be improved.

In a possible example, the displaying, by the electronic device, the service identifier on an interface for the eMBB service of the electronic device may include: switching, by the electronic device, from a network connection status identifier to the service identifier on the interface for the eMBB service of the electronic device.

In a possible example, the displaying, by the electronic device, the service identifier on an interface for the eMBB service of the electronic device may include: determining, by the electronic device, an interface for the eMBB service; querying a corresponding relationship between a pre-configured interface and a display position for the service identifier, to determine a corresponding target display position on the interface for the eMBB service; and displaying the service identifier at the target display position.

In an implementation, the preset position may be different positions on the electronic device for different types of interfaces. For example, for a data status interface, the service identifier may be displayed in the upper left corner of the interface; and for an integrated application interface that is presented in response to opening of an another application in the data status interface, the service identifier may be displayed for example in the upper-middle part of the integrated application interface.

In this example, for different types of interfaces for the eMBB service, the electronic device can flexibly adapt the display position of the service identifier on the current service interface, thereby improving the flexibility and intelligence of the electronic device in displaying the service identifier.

In a possible example, the method may further include: transmitting, by the electronic device, service data of the eMBB service through the first 5G NSA network.

The service data of the eMBB service may include the user's uplink data.

In this example, the electronic device can transmit the uplink data of the eMBB service through the first 5G NSA network, which is consistent with the network architecture associated with the currently displayed service identifier, thereby improving the consistency of the service identifier displayed by the electronic device.

The transmitting, by the electronic device, the uplink data of the eMBB service through the first 5G NSA network may include: transmitting the uplink data of the service through the second communication connection and the NG core (for the case where no uplink data distribution scheme is adopted); or transmitting the uplink data of the eMBB service through the second and first communication connections and the NG core (for the case where an uplink data distribution scheme is adopted).

In an implementation, the uplink data may be transmitted to the NG core directly through the second communication connection for interaction, or may be transmitted to the NG core directly through the first communication connection for interaction, according to the actual situation.

In this example, since the electronic device is in the doubly connected mode, the transmission of the service data can be flexibly selected based on the quality of the channels, thereby improving the efficiency and stability of the data transmission.

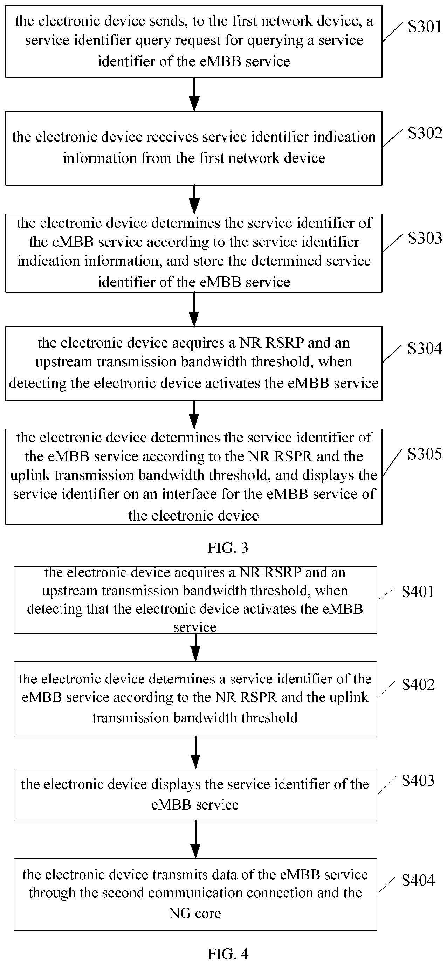

Referring to FIG. 3, a schematic flowchart of a method for displaying a service identifier according to the embodiments of the present disclosure is illustrated, which is consistent to the embodiment shown in FIG. 2. The method may be applied to the electronic device in the communication system shown in FIG. 1a. The electronic device supports an eMBB service and a doubly connected mode. In the doubly connected mode, the electronic device establishes a first communication connection with a first network device and establishes a second communication connection with a second network device. The first and second network devices are on a first 5th Generation 5G Non-Standalone NSA network. The first network device is an evolutional 4th Generation 4G nodeB eNB, and the second network device is a 5G nodeB gNB. A core of the first 5G NSA network is a NG core. The first network device communicates with the second network device and the NG core. As shown in the figure, the method for displaying a service identifier may include operations as follows.

In operation 301, the electronic device sends, to the first network device, a service identifier query request for querying a service identifier of the eMBB service.

In operation 302, the electronic device receives service identifier indication information from the first network device.

In operation 303, the electronic device determines the service identifier of the eMBB service according to the service identifier indication information, and store the determined service identifier of the eMBB service.

In operation 304, the electronic device acquires a NR Reference Signal Receiving Power (RSRP) and an upstream transmission bandwidth threshold, when it is detected that the electronic device activates the eMBB service.

In operation 305, the electronic device determines the service identifier of the eMBB service according to the NR RSPR and the uplink transmission bandwidth threshold, and displays the service identifier on an interface for the eMBB service of the electronic device.

In the embodiments of the present disclosure, when it is detected that the electronic device activates an eMBB service, the electronic device acquires a service identifier matching the current communication status of the electronic device is acquired, and displays the service identifier on the interface for the eMBB service of the electronic device. As can be seen, during the execution of the eMBB service, the electronic device can display a proper service identifier, such as a first service identifier or a second service identifier, according to the communication status. In this way, the actual communication status of the electronic device during the eMBB service can be accurately, intuitively and comprehensively displayed, which is beneficial to improve the comprehensiveness and accuracy of the information display of the electronic device under the eMBB service.

In addition, the electronic device can quickly and accurately determine the service identifier of the eMBB service by means of the query mechanism, improving the accuracy and efficiency of displaying the service identifier.

Referring to FIG. 4, a schematic flow chart of a method for displaying a service identifier according to the embodiments of the present disclosure is illustrated, which is consistent to the embodiment shown in FIG. 2. The method may be applied to an electronic device. The electronic device supports an eMBB service and a doubly connected mode. In the doubly connected mode, the electronic device establishes a first communication connection with a first network device and establishes a second communication connection with a second network device. The first and second network devices are on a first 5th Generation 5G Non-Standalone NSA network. The first network device is an evolutional 4th Generation 4G nodeB eNB, and the second network device is a 5G nodeB gNB. A core of the first 5G NSA network is a NG core. The first network device communicates with the second network device and the NG core. As shown in the figure, the method for displaying a service identifier may include operations as follows.

In operation 401, the electronic device acquires a NR Reference Signal Receiving Power (RSRP) and an upstream transmission bandwidth threshold, when it is detected that the electronic device activates the eMBB service.

In operation 402, the electronic device determines a service identifier of the eMBB service according to the NR RSPR and the uplink transmission bandwidth threshold.

In operation 403, the electronic device displays the service identifier of the eMBB service.

In operation 404, the electronic device transmits data of the eMBB service through the second communication connection and the NG core.

In the embodiments of this disclosure, when it is detected that the electronic device activates an eMBB service, the electronic device acquires a NR Reference Signal Receiving Power (RSRP) and an upstream transmission bandwidth threshold, determines a service identifier of the eMBB service according to the NR RSPR and the upstream transmission bandwidth threshold, and displays the service identifier on an interface. As can be seen, during the execution of the eMBB service, the electronic device can determine the corresponding service identifier according to the status of the uplink data, and display for example a 4G identifier or a 5G identifier. In this way, the actual data transmission status of the electronic device during the eMBB service can be accurately, intuitively and comprehensively displayed, which is beneficial to improve the comprehensiveness and accuracy of the information display of the electronic device under the eMBB service.

In addition, since the electronic device is in the doubly connected mode, the transmission of the service data can be flexibly selected based on the quality of the channels, thereby improving the efficiency and stability of the data transmission.

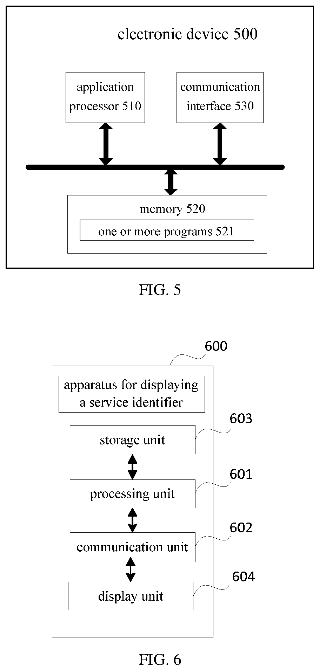

Referring to FIG. 5, a schematic structural diagram of an electronic device 500 according to the embodiments of the present disclosure is illustrated, which is consistent to the embodiments shown in FIG. 2, FIG. 3 and FIG. 4. As shown in the figure, the electronic device 500 supports an eMBB service and a doubly connected mode. In the doubly connected mode, the electronic device 500 establishes a first communication connection with a first network device and establishes a second communication connection with a second network device. The first and second network devices are on a first 5th Generation 5G Non-Standalone NSA network. The first network device is an evolutional 4th Generation 4G nodeB eNB, and the second network device is a 5G nodeB gNB. A core of the first 5G NSA network is a NG core. The first network device communicates with the second network device and the NG core. The electronic device 500 includes an application processor 510, a memory 520, a communication interface 530, and one or more programs 521. The one or more programs 521 are stored in the memory 520 and configured to be executed by the application processor 510. The one or more programs 521 include instructions for implementing the following operations:
acquiring a NR Reference Signal Receiving Power (RSRP) and an upstream transmission bandwidth threshold, when it is detected that the electronic device activates the eMBB service; and
determining a service identifier of the eMBB service according to the NR RSPR and the uplink transmission bandwidth threshold, and displaying the service identifier of the eMBB service.

In the embodiments of this disclosure, when it is detected that the electronic device activates an eMBB service, the electronic device acquires a NR Reference Signal Receiving Power (RSRP) and an upstream transmission bandwidth threshold, determines a service identifier of the eMBB service according to the NR RSPR and the upstream transmission bandwidth threshold, and display the service identifier on an interface. As can be seen, during the execution of the eMBB service, the electronic device can determine the corresponding service identifier according to the status of the uplink data, and display for example a 4G identifier or a 5G identifier. In this way, the actual data transmission status of the electronic device during the eMBB service can be accurately, intuitively and comprehensively displayed, which is beneficial to improve the comprehensiveness and accuracy of the information display of the electronic device under the eMBB service.

In a possible example, the program may further include instructions for implementing the following operations: before the service identifier matching the current communication status of the electronic device is acquired, sending, to the first network device, a service identifier query request for querying the service identifier of the eMBB service, receiving service identifier indication information from the first network device, determining the service identifier of the eMBB service according to the service identification indication information and storing the determined service identifier of the eMBB service.

The introduction of the solutions of the embodiments of the present disclosure in the foregoing is mainly from the perspective of the execution of a method. It can be understood that, in order to implement the functions mentioned above, the electronic device may include corresponding hardware structure(s) and/or software module(s) to achieve the various functions. Those skilled in the art should easily realize that the units and algorithm operations of the various examples described in combination with the embodiments provided herein can be implemented in hardware or a combination of hardware and computer software. Whether a function is executed by hardware or by driving hardware with computer software may depend on the specific application and design constraints of the technical solution. Technicians may use different methods to implement the described functions for each specific application, but such implementation should not be considered as going beyond the scope of this disclosure.

In the embodiments of the present disclosure, the electronic device may be divided into functional units according to the foregoing examples of the method. For example, one functional unit may be divided for each function, or two or more functional units may be integrated into one processing unit. The integrated unit may be realized in hardware or software functional unit(s). It should be noted that the division of the units in the embodiments of the present disclosure is illustrative, which is made only in terms of logical function, and there may be other divisions in actual implementation.

FIG. 6 is a block diagram of the functional units of an apparatus for displaying a service identifier 600 according to the embodiments of the present disclosure. The apparatus for displaying a service identifier 600 may be applied to an electronic device, and the electronic device supports an eMBB service and a doubly connected mode. In the doubly connected mode, the electronic device establishes a first communication connection with a first network device and establishes a second communication connection with a second network device. The first and second network devices are on a first 5th Generation 5G Non-Standalone NSA network. The first network device is an evolutional 4th Generation 4G nodeB eNB, and the second network device is a 5G nodeB gNB. A core of the first 5G NSA network is a NG core. The first network device communicates with the second network device and the NG core. The apparatus for displaying a service identifier 600 may include a processing unit 601, a communication unit 602, and a display unit 604.

The processing unit 601 is configured to acquire a NR Reference Signal Receiving Power (RSRP) and an upstream transmission bandwidth threshold when it is detected that the electronic device activates the eMBB service, determine a service identifier of the eMBB service according to the NR RSPR and the upstream transmission bandwidth threshold, and control the display unit to display the service identifier of the eMBB service.

The apparatus for displaying a service identifier 600 may further include a storage unit 603 for storing program codes and data of the electronic device. The processing unit 601 may be a processor, the communication unit 602 may be a touch screen or a transceiver, and the storage unit 603 may be a memory.

In the embodiments of this disclosure, when it is detected that the electronic device activates an eMBB service, the electronic device acquires a NR Reference Signal Receiving Power (RSRP) and an upstream transmission bandwidth threshold, determines a service identifier of the eMBB service according to the NR RSPR and the upstream transmission bandwidth threshold, and display the service identifier on an interface. As can be seen, during the execution of the eMBB service, the electronic device can determine the corresponding service identifier according to the status of the uplink data, and display for example a 4G identifier or a 5G identifier. In this way, the actual data transmission status of the electronic device during the eMBB service can be accurately, intuitively and comprehensively displayed, which is beneficial to improve the comprehensiveness and accuracy of the information display of the electronic device under the eMBB service.

The embodiments of the present disclosure further provide a computer storage medium. The computer storage medium stores a computer program for electronic data interchange. The computer program causes a computer to execute part or all of the operations of any method as recited in the above method embodiments. The computer includes an electronic device.

The embodiments of the present disclosure further provide a computer program product. The computer program product includes a non-transitory computer-readable storage medium storing a computer program. The computer program is operable to cause a computer to execute part or all of the operations of any method as recited in the above method embodiments. The computer program product may be a software installation package, and the computer includes an electronic device.

It should be noted that, as for the foregoing method embodiments, they are all expressed as a combination of a series of action s for the sake of simple description, but those skilled in the art should know that this disclosure is not limited by the described sequence of the actions. That is because some operations can be performed in other order or simultaneously according to this disclosure. Secondly, those skilled in the art should also know that the embodiments described in the description are all preferred embodiments, and the involved actions and modules are not necessarily required by this disclosure.

In the above-mentioned embodiments, the description of each embodiment has its own focus. For parts that are not described in detail in an embodiment, reference may be made to related descriptions of other embodiments.

It should be understood that, in the several embodiments provided in this disclosure, the disclosed apparatus may be implemented in other ways. For example, the apparatus embodiments described above are merely illustrative. For example, the division of the above-mentioned units is only made in terms of logical function, and there may be other divisions in actual implementation. For example, multiple units or components may be combined or integrated into another system, or some features may be omitted or not implemented. In addition, the coupling, including direct coupling or communication connection, between the units shown or discussed may be indirect coupling or communication connection by means of some interfaces, devices or modules, which may be electrical, mechanical or in other forms.

The units described as separate components in the above may or may not be physically separated, and the components displayed as units may or may not be physical units, that is, they may be located in one place or may be distributed on multiple network units. Some or all of the units may be selected according to actual needs to achieve the objectives of the solutions of the embodiments.

In addition, the functional units in the embodiments of the disclosure may be integrated into one processing unit, or each of the units may exist alone physically, or two or more units may be integrated into one unit. The integrated unit may be implemented in hardware or software functional unit(s).

The integrated unit, when being realized in software functional units and sold or used as an independent product, can be stored in a computer readable memory. Based on this understanding, the essential technical solution of the present disclosure, or the part that contributes to the related art, or all or part of the technical solution can be embodied in a software product. The computer software product may be stored in a memory, and include several instructions that cause a computer device (which may be a personal computer, a server, a network device, or the like) to execute all or part of the operations of the foregoing methods of the various embodiments of the present disclosure. The memory may include: a U disk, a read-only memory (ROM), a random access memory (RAM), a mobile hard disk, a magnetic disk, an optical disk or other media that can store program codes.

Those of ordinary skill in the art can understand that all or part of the operations in the methods of the above embodiments can be completed by instructing relevant hardware with a program. The program may be stored in a computer-readable memory, and the memory may include: a flash disk, a read-only memory (ROM), a random access memory (RAM), a magnetic disk, an optical disk, or the like.

The embodiments of the disclosure have been described in detail in the foregoing, and specific examples are adopted herein to illustrate the principle and implementations of the disclosure. The descriptions of the above embodiments are only used to facilitate understanding of the method and core ideas of the present disclosure.

## Claims

1. A method for displaying a service identifier, applicable to an electronic device (101, 120, 500), wherein the electronic device supports an enhanced Mobile Broadband -eMBB- service and a doubly connected mode, the electronic device (101, 120, 500) establishes a first communication connection with a first network device (102) and establishes a second communication connection with a second network device (103) in the doubly connected mode, the first and second network devices (110, 102, 103) are on a first 5th Generation -5G- Non-Standalone -NSA- network, the first network device (102) is an evolutional 4th Generation -4G- nodeB, the second network device (103) is a 5G nodeB, a core of the first 5G NSA network is a 5G Next Generation core, the first network device (102) communicates with the second network device (103) and the 5G Next Generation core, and the method comprises:
acquiring (201, 304) a New Radio -NR- Reference Signal Receiving Power -RSRP- and an uplink transmission bandwidth threshold, when it is detected that the electronic device (101, 120, 500) activates the eMBB service;
determining (202, 305) a service identifier of the eMBB service according to the NR RSPR and the uplink transmission bandwidth threshold; and
displaying (203, 305) the service identifier of the eMBB service.

2. The method as claimed in claim 1, wherein the determining (202, 305) the service identifier of the eMBB service according to the NR RSPR and the uplink transmission bandwidth threshold, comprises:
determining a 5G identifier of the eMBB service as the service identifier of the eMBB service, when the NR RSPR is greater than a power threshold and the uplink transmission bandwidth threshold is greater than an uplink threshold; or
acquiring a 4G ratio LTE_ratio and a 5G ratio NR_ratio in an uplink data distribution when the NR RSPR is smaller than the power threshold and the uplink transmission bandwidth threshold is smaller than the uplink threshold, and determining a 4G identifier of the eMBB service as the service identifier of the eMBB service when the LTE_ratio is greater than the NR_ratio, or determining a 5G identifier of the eMBB service as the service identifier of the eMBB service when the LTE_ratio is smaller than or equal to the NR_ratio.

3. The method as claimed in claim 2, wherein the LTE_ratio is calculated as follows:
LTE_ratio=(10GB-A)/10GB, where A is an uplink transmission bandwidth pre-assigned to the first network device, and
wherein the NR_ratio is obtained by subtracting the LTE_ratio from the uplink transmission bandwidth threshold.

4. The method as claimed in claim 2, wherein the 5G identifier of the eMBB service is 5G eMBB, and the 4G identifier of the eMBB service is 4G.

5. The method as claimed in any one of claims 1 to 4, wherein after it is detected that the electronic device (101, 120, 500) activates the eMBB service, the method further comprises:
sending (301), to the first network device (102), a service identifier query request for querying the service identifier of the eMBB service;
receiving (302) service identifier indication information from the first network device (102); and determining (303) the service identifier of the eMBB service according to the service identifier indication information, and storing the determined service identifier of the eMBB service.

6. The method as claimed in any one of claims 1 to 4, wherein the displaying (203, 305) the service identifier of the eMBB service, comprises:
displaying the service identifier at a preset position of an interface for the eMBB service of the electronic device (101, 120, 500), the preset position matching a display position of the electronic device (101, 120, 500) where a network connection status is displayed.

7. The method as claimed in any one of claims 1 to 6, wherein the method further comprises:
transmitting data of the eMBB service through the first 5G NSA network.

8. The method as claimed in claim 7, wherein the transmitting the data of the eMBB service through the first 5G NSA network, comprises:
transmitting (404) the data of the eMBB service through the second communication connection and the 5G Next Generation core.

9. The method as claimed in claim 7, wherein the transmitting the data of the eMBB service through the first 5G NSA network, comprises:
transmitting the data of the eMBB service through the second and first communication connections and the 5G Next Generation core.

10. An apparatus (600) for displaying a service identifier, applicable to an electronic device (101, 120, 500), wherein the electronic device supports an eMBB service and a doubly connected mode, the electronic device (101, 120, 500) establishes a first communication connection with a first network device (102) and establishes a second communication connection with a second network device (103) in the doubly connected mode, the first and second network devices (110, 102, 103) are on a first 5th Generation -5G- Non-Standalone -NSA- network, the first network device (102) is an evolutional 4th Generation -4G- nodeB, the second network device (103) is a 5G nodeB, a core of the first 5G NSA network is a 5G Next Generation core, the first network device (102) communicates with the second network device (103) and the 5G Next Generation core, and the apparatus (600) comprises a processing unit (601) and a communication unit (602), wherein
the processing unit (601) is configured to: acquire a New Radio -NR- Reference Signal Receiving Power -RSRP- and an uplink transmission bandwidth threshold, when it is detected that the electronic device (101, 120, 500) activates the eMBB service; determine a service identifier of the eMBB service according to the NR RSPR and the uplink transmission bandwidth threshold; and display the service identifier of the eMBB service.

11. The apparatus (600) as claimed in claim 10, wherein the processing unit (601) is specifically configured to:
determine a 5G identifier of the eMBB service as the service identifier of the eMBB service, when the NR RSPR is greater than a power threshold and the uplink transmission bandwidth threshold is greater than an uplink threshold; or
acquire a 4G ratio LTE_ratio and a 5G ratio NR_ratio in an uplink data distribution when the NR RSPR is smaller than the power threshold and the uplink transmission bandwidth threshold is smaller than the uplink threshold, and determine a 4G identifier of the eMBB service as the service identifier of the eMBB service when the LTE_ratio is greater than the NR_ratio, or determine a 5G identifier of the eMBB service as the service identifier of the eMBB service when the LTE_ratio is smaller than or equal to the NR_ratio.

12. The apparatus (600) as claimed in claim 11, wherein the LTE_ratio is calculated as follows:
LTE_ratio=(10GB-A)/10GB, where A is an uplink transmission bandwidth pre-assigned to the first network device, and
wherein the NR_ratio is obtained by subtracting the LTE_ratio from the uplink transmission bandwidth threshold.

13. The apparatus (600) as claimed in any one of claims 10 to 12,
wherein the communication unit (602) is configured to send, to the first network device (102), a service identifier query request for querying the service identifier of the eMBB service, and receive service identifier indication information from the first network device (102); and
wherein the processing unit (601) is further configured to determine the service identifier of the eMBB service according to the service identifier indication information, and store the determined service identifier of the eMBB service.

14. The apparatus (600) as claimed in any one of claims 10 to 13, wherein the communication unit (602) is further configured to transmit data of the eMBB service through the first 5G NSA network.

15. An electronic device (500), comprising the apparatus (600) for displaying a service identifier as claimed in any one of claims 10 to 14.

## Patentansprüche

1. Verfahren zum Anzeigen einer Dienstkennung, anwendbar auf eine elektronische Vorrichtung (101, 120, 500), wobei die elektronische Vorrichtung einen erweiterten mobilen Breitband- bzw. eMBB-Dienst und einen doppelt verbundenen Modus unterstützt, die elektronische Vorrichtung (101, 120, 500) in dem doppelt verbundenen Modus eine erste Kommunikationsverbindung mit einer ersten Netzwerkvorrichtung (102) einrichtet und eine zweite Kommunikationsverbindung mit einer zweiten Netzwerkvorrichtung (103) einrichtet, die erste und die zweite Netzwerkvorrichtung (110, 102, 103) in einem ersten nicht eigenständigen bzw. NSA-Netzwerk der 5. Generation -5G- sind, die erste Netzwerkvorrichtung (102) ein evolutionärer B-Knoten der 4. Generation -4G- ist, die zweite Netzwerkvorrichtung (103) ein 5G-B-Knoten ist, ein Kern des ersten 5G-NSA-Netzwerks ein 5G-Knoten der nächsten Generation ist, die erste Netzwerkvorrichtung (102) mit der zweiten Netzwerkvorrichtung (103) und dem 5G-Knoten der nächsten Generation kommuniziert und das Verfahren umfasst:
Erfassen (201, 304) einer New-Radio- bzw. NR-Referenzsignal-Empfangsleistung -RSRP- und eines Aufwärtsstrecken-Übertragungsbandbreiten-Schwellenwerts, wenn detektiert wird, dass die elektronische Vorrichtung (101, 120, 500) den eMBB-Dienst aktiviert;
Bestimmen (202, 305) einer Dienstkennung des eMBB-Dienstes gemäß der NR-RSPR und dem Aufwärtsstrecken-Übertragungsbandbreiten-Schwellenwert; und
Anzeigen (203, 305) der Dienstkennung des eMBB-Dienstes.

2. Verfahren nach Anspruch 1, wobei das Bestimmen (202, 305) der Dienstkennung des eMBB-Dienstes gemäß der NR-RSPR und dem Aufwärtsstrecken-Übertragungsbandbreiten-Schwellenwert umfasst:
Bestimmen einer 5G-Kennung des eMBB-Dienstes als die Dienstkennung des eMBB-Dienstes, wenn die NR-RSPR größer als ein Leistung-Schwellenwert ist und der Aufwärtsstrecken-Übertragungsbandbreiten-Schwellenwert größer als ein Aufwärtsstrecken-Schwellenwert ist; oder
Erfassen eines 4G-Verhältnisses LTE_ratio und eines 5G-Verhältnisses NR_ratio in einer Aufwärtsstrecken-Datenverteilung, wenn die NR-RSPR kleiner als der Leistung-Schwellenwert ist und der Aufwärtsstrecken-Übertragungsbandbreiten-Schwellenwert kleiner als der Aufwärtsstrecken-Schwellenwert ist, und Bestimmen einer 4G-Kennung des eMBB-Dienstes als die Dienstkennung des eMBB-Dienstes, wenn das LTE_ratio größer als das NR_ratio ist, oder Bestimmen einer 5G-Kennung des eMBB-Dienstes als die Dienstkennung des eMBB-Dienstes, wenn das LTE_ratio kleiner als das oder gleich dem NR_ratio ist.

3. Verfahren nach Anspruch 2, wobei das LTE_ratio wie folgt berechnet wird:
LTE_ratio=(10GB-A)/10GB, wobei A eine der ersten Netzwerkvorrichtung im Voraus zugewiesene Aufwärtsstrecken-Übertragungsbandbreite ist, und
wobei das NR_ratio durch Subtrahieren des LTE_ratio von dem Aufwärtsstrecken-Übertragungsbandbreiten-Schwellenwert erhalten wird.

4. Verfahren nach Anspruch 2, wobei die 5G-Kennung des eMBB-Dienstes 5G eMBB ist und die 4G-Kennung des eMBB-Dienstes 4G ist.

5. Verfahren nach einem der Ansprüche 1 bis 4, wobei, nachdem detektiert wird, dass die elektronische Vorrichtung (101, 120, 500) den eMBB-Dienst aktiviert, das Verfahren ferner umfasst:
Senden (301), an die erste Netzwerkvorrichtung (102), einer Dienstkennung-Abfrageanforderung zum Abfragen der Dienstkennung des eMBB-Dienstes;
Empfangen (302) von Dienstkennung-Angabeinformationen von der ersten Netzwerkvorrichtung (102); und Bestimmen (303) der Dienstkennung des eMBB-Dienstes gemäß den Dienstkennung-Angabeinformationen und Speichern der bestimmten Dienstkennung des eMBB-Dienstes.

6. Verfahren nach einem der Ansprüche 1 bis 4, wobei das Anzeigen (203, 305) der Dienstkennung des eMBB-Dienstes umfasst:
Anzeigen der Dienstkennung an einer voreingestellten Position einer Schnittstelle für den eMBB-Dienst der elektronischen Vorrichtung (101, 120, 500), wobei die voreingestellte Position mit einer Anzeigeposition der elektronischen Vorrichtung (101, 120, 500), an der ein Netzwerkverbindungsstatus angezeigt wird, übereinstimmt.

7. Verfahren nach einem der Ansprüche 1 bis 6, wobei das Verfahren ferner umfasst:
Übertragen von Daten des eMBB-Dienstes durch das erste 5G-NSA-Netzwerk.

8. Verfahren nach Anspruch 7, wobei das Übertragen der Daten des eMBB-Dienstes durch das erste 5G-NSA-Netzwerk umfasst:
Übertragen (404) der Daten des eMBB-Dienstes durch die zweite Kommunikationsverbindung und den 5G-Knoten der nächsten Generation.

9. Verfahren nach Anspruch 7, wobei das Übertragen der Daten des eMBB-Dienstes durch das erste 5G-NSA-Netzwerk umfasst:
Übertragen der Daten des eMBB-Dienstes durch die zweite und die erste Kommunikationsverbindung und den 5G-Knoten der nächsten Generation.

10. Gerät (600) zum Anzeigen einer Dienstkennung, anwendbar auf eine elektronische Vorrichtung (101, 120, 500), wobei die elektronische Vorrichtung einen eMBB-Dienst und einen doppelt verbundenen Modus unterstützt, die elektronische Vorrichtung (101, 120, 500) in dem doppelt verbundenen Modus eine erste Kommunikationsverbindung mit einer ersten Netzwerkvorrichtung (102) einrichtet und eine zweite Kommunikationsverbindung mit einer zweiten Netzwerkvorrichtung (103) einrichtet, die erste und die zweite Netzwerkvorrichtung (110, 102, 103) in einem ersten nicht eigenständigen bzw. NSA-Netzwerk der 5. Generation -5G- sind, die erste Netzwerkvorrichtung (102) ein evolutionärer B-Knoten der 4. Generation -4G- ist, die zweite Netzwerkvorrichtung (103) ein 5G-B-Knoten ist, ein Kern des ersten 5G-NSA-Netzwerks ein 5G-Knoten der nächsten Generation ist, die erste Netzwerkvorrichtung (102) mit der zweiten Netzwerkvorrichtung (103) und dem 5G-Knoten der nächsten Generation kommuniziert und das Gerät (600) eine Verarbeitungseinheit (601) und eine Kommunikationseinheit (602) umfasst, wobei
die Verarbeitungseinheit (601) konfiguriert ist zum: Erfassen einer New-Radio- bzw. NR-Referenzsignal-Empfangsleistung -RSRP- und eines Aufwärtsstrecken-Übertragungsbandbreiten-Schwellenwerts, wenn detektiert wird, dass die elektronische Vorrichtung (101, 120, 500) den eMBB-Dienst aktiviert; Bestimmen einer Dienstkennung des eMBB-Dienstes gemäß der NR-RSPR und dem Aufwärtsstrecken-Übertragungsbandbreiten-Schwellenwert; und Anzeigen der Dienstkennung des eMBB-Dienstes.

11. Gerät (600) nach Anspruch 10, wobei die Verarbeitungseinheit (601) spezifisch konfiguriert ist zum:
Bestimmen einer 5G-Kennung des eMBB-Dienstes als die Dienstkennung des eMBB-Dienstes, wenn die NR-RSPR größer als ein Leistung-Schwellenwert ist und der Aufwärtsstrecken-Übertragungsbandbreiten-Schwellenwert größer als ein Aufwärtsstrecken-Schwellenwert ist; oder
Erfassen eines 4G-Verhältnisses LTE_ratio und eines 5G-Verhältnisses NR_ratio in einer Aufwärtsstrecken-Datenverteilung, wenn die NR-RSPR kleiner als der Leistung-Schwellenwert ist und der Aufwärtsstrecken-Übertragungsbandbreiten-Schwellenwert kleiner als der Aufwärtsstrecken-Schwellenwert ist, und Bestimmen einer 4G-Kennung des eMBB-Dienstes als die Dienstkennung des eMBB-Dienstes, wenn das LTE_ratio größer als das NR_ratio ist, oder Bestimmen einer 5G-Kennung des eMBB-Dienstes als die Dienstkennung des eMBB-Dienstes, wenn das LTE_ratio kleiner als das oder gleich dem NR_ratio ist.

12. Gerät (600) nach Anspruch 11, wobei das LTE_ratio wie folgt berechnet wird:
LTE_ratio=(10GB-A)/10GB, wobei A eine der ersten Netzwerkvorrichtung im Voraus zugewiesene Aufwärtsstrecken-Übertragungsbandbreite ist, und
wobei das NR_ratio durch Subtrahieren des LTE_ratio von dem Aufwärtsstrecken-Übertragungsbandbreiten-Schwellenwert erhalten wird.

13. Gerät (600) nach einem der Ansprüche 10 bis 12,
wobei die Kommunikationseinheit (602) konfiguriert ist zum Senden, an die erste Netzwerkvorrichtung (102), einer Dienstkennung-Abfrageanforderung zum Abfragen der Dienstkennung des eMBB-Dienstes und Empfangen von Dienstkennung-Angabeinformationen von der ersten Netzwerkvorrichtung (102); und
wobei die Verarbeitungseinheit (601) ferner konfiguriert ist zum Bestimmen der Dienstkennung des eMBB-Dienstes gemäß den Dienstkennung-Angabeinformationen und Speichern der bestimmten Dienstkennung des eMBB-Dienstes.

14. Gerät (600) nach einem der Ansprüche 10 bis 13, wobei die Kommunikationseinheit (602) ferner konfiguriert ist zum Übertragen von Daten des eMBB-Dienstes durch das erste 5G-NSA-Netzwerk.

15. Elektronische Vorrichtung (500), umfassend das Gerät (600) zum Anzeigen einer Dienstkennung nach einem der Ansprüche 10 bis 14.

## Revendications

1. Procédé pour afficher un identifiant de service, applicable à un dispositif électronique (101, 120, 500), où le dispositif électronique prend en charge un service à large bande mobile amélioré, eMBB, et un mode doublement connecté, le dispositif électronique (101, 120, 500) établit une première connexion de communication avec un premier dispositif de réseau (102) et établit une seconde connexion de communication avec un second dispositif de réseau (103) dans le mode doublement connecté, les premier et second dispositifs de réseau (110, 102, 103) sont sur un premier réseau de 5^{ème} génération, 5G, non autonome, NSA, le premier dispositif de réseau (102) est un nœud B évolutif de 4^{ème} génération, 4G, le second dispositif de réseau (103) est un nœud B 5G, un cœur du premier réseau 5G NSA est un cœur 5G Next Generation, le premier dispositif de réseau (102) communique avec le second dispositif de réseau (103) et le cœur 5G Next Generation, et le procédé comprend les étapes suivantes :
acquérir (201, 304) une puissance de réception de signal de référence, RSRP, New Radio, NR, et un seuil de largeur de bande de transmission de liaison montante, lorsqu'il est détecté que le dispositif électronique (101, 120, 500) active le service eMBB ;
déterminer (202, 305) un identifiant de service du service eMBB selon la NR RSPR et le seuil de largeur de bande de transmission de liaison montante ; et
afficher (203, 305) l'identifiant de service du service eMBB.

2. Procédé tel que revendiqué dans la revendication 1, dans lequel la détermination (202, 305) de l'identifiant de service du service eMBB selon la NR RSPR et le seuil de bande passante de transmission de liaison montante, comprend les étapes suivantes :
déterminer un identifiant 5G du service eMBB en tant qu'identifiant de service du service eMBB, lorsque la NR RSPR est supérieure à un seuil de puissance et que le seuil de largeur de bande de transmission de liaison montante est supérieur à un seuil de liaison montante ; ou
acquérir un rapport 4G LTE_ratio et un rapport 5G NR_ratio dans une distribution de données de liaison montante lorsque la NR RSPR est inférieure au seuil de puissance et que le seuil de largeur de bande de transmission de liaison montante est inférieur au seuil de liaison montante, et déterminer un identifiant 4G du service eMBB comme identifiant de service du service eMBB lorsque le rapport LTE_ratio est supérieur au rapport NR_ratio, ou déterminer un identifiant 5G du service eMBB comme identifiant de service du service eMBB lorsque le rapport LTE_ratio est inférieur ou égal au rapport NR_ratio.

3. Procédé tel que revendiqué dans la revendication 2, dans lequel le rapport LTE_ratio est calculé comme suit :
LTE_ratio = (10GB-A)/10GB, où A est une largeur de bande de transmission de liaison montante pré-affectée au premier dispositif de réseau, et
où le rapport NR_ratio est obtenu en soustrayant le rapport LTE_ratio du seuil de largeur de bande de transmission de liaison montante.

4. Procédé tel que revendiqué dans la revendication 2, dans lequel l'identifiant 5G du service eMBB est 5G eMBB, et l'identifiant 4G du service eMBB est 4G.

5. Procédé tel que revendiqué dans l'une quelconque des revendications 1 à 4, dans lequel, après avoir détecté que le dispositif électronique (101, 120, 500) active le service eMBB, le procédé comprend en outre les étapes suivantes :
envoyer (301), au premier dispositif de réseau (102), une demande d'interrogation d'identifiant de service pour interroger l'identifiant de service du service eMBB ;
recevoir (302) des informations d'indication d'identifiant de service du premier dispositif de réseau (102) ; et déterminer (303) l'identifiant de service du service eMBB selon les informations d'indication d'identifiant de service, et stocker l'identifiant de service déterminé du service eMBB.

6. Procédé tel que revendiqué dans l'une quelconque des revendications 1 à 4, dans lequel l'affichage (203, 305) de l'identifiant de service du service eMBB comprend :
l'affichage de l'identifiant de service à une position prédéfinie d'une interface pour le service eMBB du dispositif électronique (101, 120, 500), la position prédéfinie correspondant à une position d'affichage du dispositif électronique (101, 120, 500) où un état de connexion au réseau est affiché.

7. Procédé tel que revendiqué dans l'une quelconque des revendications 1 à 6, dans lequel le procédé comprend en outre :
la transmission de données du service eMBB à travers le premier réseau 5G NSA.

8. Procédé tel que revendiqué dans la revendication 7, dans lequel la transmission des données du service eMBB à travers le premier réseau 5G NSA, comprend :
la transmission (404) des données du service eMBB à travers la seconde connexion de communication et du cœur 5G Next Generation.

9. Procédé tel que revendiqué dans la revendication 7, dans lequel la transmission des données du service eMBB à travers le premier réseau 5G NSA, comprend :
la transmission des données du service eMBB à travers les seconde et première connexions de communication et le cœur 5G Next Generation.

10. Appareil (600) pour afficher un identifiant de service, applicable à un dispositif électronique (101, 120, 500), où le dispositif électronique prend en charge un service eMBB et un mode doublement connecté, le dispositif électronique (101, 120, 500) établit une première connexion de communication avec un premier dispositif de réseau (102) et établit une seconde connexion de communication avec un second dispositif de réseau (103) dans le mode doublement connecté, les premier et second dispositifs de réseau (110, 102, 103) sont sur un premier réseau de 5^{ème} génération, 5G, non autonome, NSA, le premier dispositif de réseau (102) est un nœud B évolutif de 4^{ème} génération, 4G, le second dispositif de réseau (103) est un nœud B 5G, un cœur du premier réseau 5G NSA est un cœur 5G Next Generation, le premier dispositif de réseau (102) communique avec le second dispositif de réseau (103) et le cœur 5G Next Generation, et l'appareil (600) comprend une unité de traitement (601) et une unité de communication (602), où :
l'unité de traitement (601) est configurée pour : acquérir une puissance de réception de signal de référence, RSRP, New Radio, NR, et un seuil de largeur de bande de transmission de liaison montante, lorsqu'il est détecté que le dispositif électronique (101, 120, 500) active le service eMBB ; déterminer un identifiant de service du service eMBB selon la NR RSPR et le seuil de largeur de bande de transmission de liaison montante ; et afficher l'identifiant de service du service eMBB.

11. Appareil (600) tel que revendiqué dans la revendication 10, dans lequel l'unité de traitement (601) est spécifiquement configurée pour :
déterminer un identifiant 5G du service eMBB en tant qu'identifiant de service du service eMBB, lorsque la NR RSPR est supérieure à un seuil de puissance et que le seuil de largeur de bande de transmission de liaison montante est supérieur à un seuil de liaison montante ; ou
acquérir un rapport 4G LTE_ratio et un rapport 5G NR_ratio dans une distribution de données de liaison montante lorsque la NR RSPR est inférieure au seuil de puissance et que le seuil de largeur de bande de transmission de liaison montante est inférieur au seuil de liaison montante, et déterminer un identifiant 4G du service eMBB comme identifiant de service du service eMBB lorsque le rapport LTE_ratio est supérieur au rapport NR_ratio, ou déterminer un identifiant 5G du service eMBB comme identifiant de service du service eMBB lorsque le rapport LTE_ratio est inférieur ou égal au rapport NR_ratio.

12. Appareil (600) tel que revendiqué dans la revendication 11, dans lequel le rapport LTE_ratio est calculé comme suit :
LTE_ratio = (10GB-A)/10GB, où A est une largeur de bande de transmission de liaison montante pré-affectée au premier dispositif de réseau, et
où le rapport NR_ratio est obtenu en soustrayant le rapport LTE_ratio du seuil de largeur de bande de transmission de liaison montante.

13. Appareil (600) tel que revendiqué dans l'une quelconque des revendications 10 à 12,
dans lequel l'unité de communication (602) est configurée pour envoyer, au premier dispositif de réseau (102), une demande d'interrogation d'identifiant de service pour interroger l'identifiant de service du service eMBB, et recevoir des informations d'indication d'identifiant de service du premier dispositif de réseau (102) ; et
où l'unité de traitement (601) est en outre configurée pour déterminer l'identifiant de service du service eMBB selon les informations d'indication d'identifiant de service, et stocker l'identifiant de service déterminé du service eMBB.

14. Appareil (600) tel que revendiqué dans l'une quelconque des revendications 10 à 13, dans lequel l'unité de communication (602) est en outre configurée pour transmettre des données du service eMBB à travers le premier réseau 5G NSA.

15. Dispositif électronique (500), comprenant l'appareil (600) pour afficher un identifiant de service tel que revendiqué dans l'une quelconque des revendications 10 à 14.
